# EUROPÄISCHE PATENTANMELDUNG

(11) **EP 2 196 169 A1**
(43) Veröffentlichungstag der Anmeldung: **16.06.2010**
(21) Anmeldenummer: 08021425.7
(22) Anmeldetag: 10.12.2008
(51) Int. Cl.: A61C 17/22, B65D 25/54, B65D 33/04

(54) **Verkaufsverpackung mit sichtbarem elektronischen Gerät**

(71) Anmelder: Braun GmbH, 61476 Kronberg/Taunus (DE)
(72) Erfinder: Stratmann, Martin, 60318 Frankfurt/Main (DE); Reick, Hansjörg, 61449 Steinbach (DE); Hilscher, Alexander, 61440 Oberursel (DE)

(57) **Zusammenfassung**

Erfindungsgemäß ist eine Verpackung und ein elektrisches Gerät des persönlichen Bedarfs für die Körperpflege bereitgestellt, das in der Verpackung angeordnet ist und durch einen transparenten Bereich der Verpackung erkennbar ist, wobei das elektrische Gerät eine Anzeigeeinrichtung zur Abgabe eines optischen und/oder akustischen Signals, eine Energiezelle zur Versorgung der Anzeigeeinrichtung mit Energie und eine Steuereinrichtung aufweist, die die Anzeigeeinrichtung steuert, abhängig von einem Ruhemodus, bei dem kein benutzerspezifisches optisches und/oder akustisches Signal abgebbar ist und das Gerät keine elektrische Körperpflegebetriebsfunktion ausführt, einem Normalmodus, bei dem ein benutzungsspezifisches optisches und/oder akustisches Signal abgebbar ist und das Gerät zusätzlich eine elektrische Körperpflegebetriebsfunktion ausführt und einen Vorführmodus, bei dem eine benutzungsspezifische optische und/oder akustische Signalsequenz an der Anzeigeeinrichtung in der Verpackung abgebbar ist, wobei der Vorführmodus des Gerätes ohne manuelle Einwirkung auf die Verpackung aktivierbar ist.

## Beschreibung

Die vorliegende Erfindung betrifft eine Verpackung mit einem elektrischen Gerät nach dem Oberbegriff des Anspruchs 1, ein elektrisches Gerät nach dem Oberbegriff des Anspruchs 3 und ein Verfahren nach dem Oberbegriff des Anspruchs 14.

Es ist für verschiedene elektrische Geräte bereits bekannt, dass die Funktionen des Gerätes in einem Vorführmodus auf einer Anzeigeeinrichtung des Gerätes zu Demonstrationszwecken anzeigbar sind. Hierbei ist vorgesehen, dass der potentielle Konsument entweder eine entsprechende Taste unmittelbar an dem Gerät oder durch eine Verpackung hindurch betätigt, um den Vorführmodus zu aktivieren. In nachteiliger Weise kann hierbei jedoch die Verpackung oder das Gerät beschädigt werden, so dass dieses Produkt aus dem Verkaufsregal entfernt werden muß.

Es ist daher eine Aufgabe der vorliegenden Erfindung, eine Verpackung mit einem Gerät, ein Gerät und eine Verfahren der eingangs genannten Art bereitzustellen, das weniger anfällig ist für Beschädigungen oder Fehlbedienungen durch den Konsumenten im Verkaufsregal und das die Aufmerksamkeit des potentiellen Konsumenten weckt.

Diese Aufgabe wird durch eine Verpackung und ein elektrisches Gerät mit den Merkmalen des Anspruchs 1, durch ein elektrisches Gerät mit den Merkmalen des Anspruchs 3 und durch ein Verfahren mit den Merkmalen des Anspruchs 14 gelöst. Vorteilhafte Weiterbildungen der Erfindung gehen aus den Merkmalen der Unteransprüche hervor.

Erfindungsgemäß ist eine Verpackung und ein elektrisches Gerät des persönlichen Bedarfs für die Körperpflege bereitgestellt, das in der Verpackung angeordnet ist und durch einen transparenten Bereich der Verpackung erkennbar ist, wobei das elektrische Gerät eine Anzeigeeinrichtung zur Abgabe eines optischen und/oder akustischen Signals, eine Energiezelle zur Versorgung der Anzeigeeinrichtung mit Energie und eine Steuereinrichtung aufweist, die die Anzeigeeinrichtung steuert, abhängig von einem Ruhemodus, bei dem kein benutzerspezifisches optisches und/oder akustisches Signal abgebbar ist und das Gerät keine elektrische Körperpflegebetriebsfunktion ausführt, einem Normalmodus, bei dem ein benutzungsspezifisches optisches und/oder akustisches Signal abgebbar ist und das Gerät zusätzlich eine elektrische Körperpflegebetriebsfunktion ausführt und einen Vorführmodus, bei dem eine benutzungsspezifische optische und/oder akustische Signalsequenz an der Anzeigeeinrichtung in der Verpackung abgebbar ist, wobei der Vorführmodus des Gerätes ohne manuelle Einwirkung auf die Verpackung aktivierbar ist. Durch eine Aktivierung des Vorführmodus ohne manuelle Einwirkung auf die Verpackung ist somit sichergestellt, dass die Verpackung und/oder das darin liegende Gerät keinerlei Beschädigungen im Verkaufsregal erfahren. Der Vorführmodus wird somit durch Betätigung am Gerät vor der Verpackung bzw. unabhängig von der Verpackung aktiviert.

In weiterer vorteilhafter Ausbildung weist das Gerät zur Aktivierung des Normalmodus einen Schalter oder Taster auf, der derart ansteuerbar ist, dass eine Betätigung des Schalters oder Tasters, die weniger als eine Sekunde andauert, zur Aktivierung des Normalmodus führt und dass zur Aktivierung des Vorführmodus eine dazu verschiedene Aktivierungseinrichtung oder Steuerung vorgesehen ist. Durch die Verschiedenartigkeit der Aktivierung einerseits des Normalmodus und andererseits des Vorführmodus ist sichergestellt, dass im normalen bestimmungsgemäßen Gebrauch, also im Betrieb des Normalmodus des elektrischen Gerätes keine versehentliche Aktivierung des Vorführmodus erfolgt. Zudem stellt dies weiter sicher, dass eine Einwirkung auf die Verpackung oder das Gerät, wie für den Normalmodus vorgesehen, nicht nötig ist um den Vorführmodus zu aktivieren, so dass eine Beschädigung der Verpackung oder des Gerätes ausschließbar ist.

Gemäß einer weiteren Ausführungsform der Erfindung ist ein elektrisches Gerät des persönlichen Bedarfs für die Körperpflege vorgesehen, insbesondere eine Zahnbürste, das eine Energiequelle und eine Steuereinrichtung aufweist, die eine Anzeigeeinrichtung zur Abgabe eines optischen und/oder akustischen Signals mit Energie versorgt und steuert, wobei die Steuereinrichtung derart ausgebildet ist, dass die Anzeigeeinrichtung steuerbar ist abhängig von einem Ruhemodus, bei dem kein benutzungsspezifisches optisches und/oder akustisches Signal abgebbar ist und das Gerät keine zusätzliche elektrische Körperpflegebetriebsfunktion ausführt, einem Normalmodus, bei dem ein benutzungsspezifisches optisches und/oder akustisches Signal abgebbar ist (wobei optional das Gerät zusätzlich im Normalmodus eine elektrische Körperpflegebetriebsfunktion ausführt) und einem Vorführmodus, bei dem eine benutzungsspezifische optische und/oder akustische Signalsequenz an der Anzeigeeinrichtung abgebbar ist, wobei zur Aktivierung des Normalmodus ein Schalter oder Taster vorgesehen ist, der derart gesteuert ist, dass eine Betätigung des Schalters oder Tasters, die weniger als eine Sekunde andauert, zur Aktivierung des Normalmodus führt und dass zur Aktivierung des Vorführmodus eine dazu verschiedene Aktivierungseinrichtung oder Steuerung vorgesehen ist. Demzufolge ist sichergestellt, dass ein Verpackung oder das Gerät nicht im Verkaufsregal beschädigt werden, weil die Aktivierung des Vorführmodus nicht mit der Aktivierung des Normalmodus einhergeht.

In vorteilhafter Weiterbildung ist vorgesehen, dass die Steuereinrichtung die Anzeigeeinrichtung und das Gerät derart ansteuert, dass im Vorführmodus eine Benutzung des Gerätes simulierbar ist, bei der an der Anzeigeeinrichtung ein benutzerspezifisches Signal abgebbar ist, ohne dass das Gerät eine elektrische Körperpflegebetriebsfunktion ausführt. Somit wird einerseits im Normalmodus die elektrische Körperpflegebetriebsfunktion, wie z. B. ein elektrischer Antrieb eines Borstenfeldes einer elektrischen Zahnbürste mit dem dazu korrespondierenden benutzspezifischen Signal auf der Anzeigeinrichtung (z. B. Timerfunktion) betrieben. Andererseits ist die Steuereinrichtung derart ausgebildet, dass im Vorführmodus ein zumindest jeweils zur Benutzung ähnliches benutzerspezifisches Signal an der Anzeigeeinrichtung angezeigt wird bzw. anzeigbar ist und die elektrische Körperpflegebetriebsfunktion gleichzeitig nicht betrieben wird. In einer Variante ist im Vorführmodus die Anzeigeeinrichtung aktiviert und gleichzeitig die elektrische Körperpflegebetriebsfunktion ebenfalls aktiviert. In einer weiteren Variante wird im Normalmodus kein benutzerspezifisches optisches und/oder akustisches Signal abgegeben und lediglich die Hauptfunktion, namentlich die elektrische Körperpflegebetriebsfunktion, ausgeführt.

In weiterer vorteilhafter Ausbildung ist vorgesehen, dass die Anzeigeeinrichtung im Vorführmodus derart ansteuerbar ist, dass die Signale gegenüber dem Normalmodus abweichen und/oder in beschleunigter Abfolge anzeigbar sind. Somit werden auch im Vorführmodus grundsätzlich die benutzerspezifischen Signale an der Anzeigeeinrichtung, die normalerweise mit der Benutzung der elektrischen Körperpflegebetriebsfunktion einhergehen auch im Vorführmodus angezeigt. In vorteilhafter Weise kann jedoch durch die beschleunigte Abfolge der Funktionsumfang des elektrischen Gerätes für den Kunden im Verkaufsregal schneller erfasst werden.

In weiterer vorteilhafter Ausbildung ist vorgesehen, dass die Aktivierungseinrichtung zur Aktivierung des Vorführmodus einen Schalter oder Taster aufweist, der insbesondere vom Schalter oder Taster für den Normalmodus verschieden ist. Demzufolge wird auch für den Vorführmodus eine manuelle Aktivierung vorgeschlagen, die jedoch von der Aktivierung des Normalmodus abweicht. Diese Aktivierung kann beispielsweise durch das einlegen der Batterie, durch Betätigen eines anderen Schalters als den für den Normalmodus, durch längeres Herunterdrücken des Schalters für den Normalmodus oder durch eine bestimmte Schaltsequenz eines Schalters oder Tasters erreicht werden.

In weiterer vorteilhafter Ausbildung ist vorgesehen, dass die Aktivierungseinrichtung zur Aktivierung des Vorführmodus eine Funkempfangseinrichtung zur drahtlosen Aktivierung per Funksignal aufweist. Eine Aktivierung der Aktivierungseinrichtung des Vorführmodus per Funk, wie beispielsweise per Bluetooth oder per Infrarot (dies wird hier auch als "Funksignal" verstanden) oder sonstige drahtlose Aktivierungsarten, erlaubt eine in der Handhabung einfachere Aktivierung des Vorführmodus schon ab Werk oder bei Erreichen des Verkaufsregals durch Betätigen eines geeigneten Sendesignals.

In weiterer vorteilhafter Ausbildung ist vorgesehen, dass die Aktivierungseinrichtung zur Aktivierung des Vorführmodus eine Zeitsteuereinrichtung aufweist, die nach Verstreichen einer vorgegebenen Zeit eine Selbstaktivierung auslöst. Beispielsweise kann in der Zeitsteuereinrichtung eine vorgegebene Zeit von 30 Tagen eingestellt sein, so dass ab Werk eine Aktivierung des Vorführmodus per Funk oder manuell oder durch eine sonstige Maßnahme erfolgt und diese Aktivierung zeitverzögert selbsttätig ausgeführt wird. Somit wird verhindert, dass der Vorführmodus bereits beim Transport des Gerätes in der Verpackung aktiv ausgeführt wird, obwohl das Produkt noch nicht im Verkaufsregal des Händlers angekommen ist. Somit wird durch diese Maßnahme Energie zum Betreiben der Anzeigeeinrichtung gespart.

In weiterer vorteilhafter Ausbildung ist vorgesehen, dass die Zeitsteuerung die verstrichene Zeit seit der letzten Benutzung des Gerätes im Normalmodus auswertet und diesen ermittelten Zeitwert mit einem Schwellwert vergleicht und bei Überschreiten des Schwellwertes den Vorführmodus aktiviert. Dieses Merkmal ist vor allem als Erinnerungsfunktion an den Benutzer des Gerätes gedacht, dass z. B. bei Nichtbenutzung der Zahnbürste oder eines anderen elektrischen Gerätes für eine gewissen Zeitraum, so dass das Gerät auf sich aufmerksam macht und eine elektrische Funktion ausführt und der Benutzer an die Benutzung des Gerätes erinnert wird. Diese elektrische Erinnerungsfunktion kann darin bestehen, dass lediglich eine LED für eine gewisse Zeit blinkt, dass der Vorführmodus aktiviert wird, bei dem z. B. alle Grundfunktionen im Zeitraffer an der Anzeigeeinrichtung dargestellt werden, dass die Körperpflegefunktion kurzzeitig und/oder in bestimmten Abständen immer wieder aktiviert wird oder ein Tonsignal oder eine Melodie wiedergegeben wird. Diese Erinnerungsfunktion kann in bestimmten zeitlichen Abständen nach Überschreiten des Zeitschwellwertes wiederholt werden oder nur einmalig ausgeführt werden. Auch ist denkbar, dass diese Erinnerungsfunktion nur zu bestimmten Tageszeiten, z. B. morgens und abends aktiviert ist, wenn eine Benutzung des Gerätes wie z. B. einer Zahnbürste empfohlen wird.

In weiterer vorteilhafter Weiterbildung ist die Anzeigeeinrichtung als separates Teil des Gerätes vorgesehen ist. Das Gerät besteht also mindestens aus zwei Bestandteilen, die vorzugsweise beide elektrisch betrieben sind, wobei einer dieser separaten Teile des Gerätes die Anzeigeeinrichtung umfasst. Durch eine separate Anzeigeeinrichtung können die Funktionen des Gerätes im Vorführmodus besonders gut dargestellt werden. In einer Variante ist die Anzeigeeinrichtung sowohl in dem separaten Teil des Gerätes als auch in dem weiteren Teil des Gerätes vorgesehen oder in einer weiteren Variante ist die Anzeigeeinrichtung Teil des Gerätes, dass auch die Körperpflegefunktion ausführt. Als elektrisches Gerät ist beispielsweise (ohne Begrenzung auf diese Beispiele) eine elektrische Zahnbürste mit separater Anzeigeeinrichtung für z.B. die verstrichene Putzzeit (4- Quadrantentimer), eine einteilige elektrische Zahnbürste oder eine Rasiergerät geeignet. Die angezeigte Putzzeit, der Anpressdruck der Zahnbürste, der Energiezellenstatus, der Ein/Aus Zustand oder andere betriebsrelevante Informationen sind Beispiele für ein benutzerspezifisches Signal (siehe weitere Beispiele im Folgenden).

In weiterer vorteilhafter Ausbildung ist vorgesehen, dass sich die benutzerspezifischen Anzeigefunktionen, die vorzugsweise sowohl im Normalmodus des Gerätes als auch im Vorführmodus angezeigt werden, unterscheiden von denen des Normalmodus. Dabei werden für den Vorführmodus insbesondere die Funktionen, die im Verkaufsregal nicht benötigt werden, zumindest zeitweise, deaktiviert, intermittierend betrieben bzw. nicht angezeigt, soweit der Energieverbrauch zu hoch ist.

In weiterer vorteilhafter Ausbildung ist vorgesehen, dass das Gerät im Vorführmodus derart ansteuerbar ist, dass der Energieverbrauch der Anzeigeeinrichtung geringer ist als der Energieverbrauch der Anzeigeeinrichtung im Normalmodus. Es werden hierzu bestimmte Funktionen der Anzeigeeinrichtung abhängig von Ihrem Energieverbrauch nur intermittierend oder gar nicht betrieben, so dass eine lange Betriebsdauer des Vorführmodus im Verkaufsregal gewährleistet ist.

In weiterer vorteilhafter Ausbildung ist vorgesehen, dass die Anzeigeeinrichtung im Vorführmodus derart ansteuerbar ist, dass dieses Segmente oder Bilddarstellungen auf einem energiesparenden Liquid-Crystal-Display zeigt und/oder eine Leuchtdiode gepulst betreibbar ist und/oder ein Funkempfänger der Anzeigeeinrichtung nach der Aktivierung des Vorführmodus automatisch abschaltbar ist. Somit wird der Energieverbrauch der Anzeigeeinrichtung stark reduziert.

In weiterer vorteilhafter Ausbildung ist vorgesehen, dass die Anzeigeeinrichtung derart ansteuerbar ist, dass die Deaktivierung des Vorführmodus durch Herausnehmen und wieder Einlegen der Batterien und/oder eine spezifische Tastenkombination betätigbar ist. Vorzugsweise erfolgt die Deaktivierung durch eine Handlung die der Benutzer des elektrischen Gerätes zur Inbetriebnahme ohnehin durchführt oder durch eine Aktion die für den sonstigen bestimmungsgemäßen Gebrauch des Gerätes nicht erforderlich ist.

Erfindungsgemäß ist weiterhin ein Verfahren zur Aktivierung eines Vorführmodus eines elektrischen Gerätes vorgesehen.

In weiterer vorteilhafter Weiterbildung des Verfahrens ist vorgesehen, dass die Anzeigeeinrichtung zunächst einem Testmode unterzogen wird, bei dem alle Funktionen der Anzeigeeinrichtung geprüft werden und anschließend die Aktivierung des Vorführmodus erfolgt. Es wird demgemäß vorgeschlagen eine der letzten Handlungen des Herstellers bevor das Gerät das Herstellwerk verlässt mit der (ggf. zeitverzögerten) Aktivierung des Vorführmodus zu kombinieren. Die Qualitätsprüfung der Anzeigeeinrichtung ist üblicherweise eine solche Handlung.

Das Verfahren ist in Weiterbildung durch zumindest eines der obigen Merkmale gekennzeichnet.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand vorliegender Erfindung, auch unabhängig von ihrer Zusammenfassung in den Ansprüchen oder deren Rückbeziehung. Es zeigen:
- Figur 1: eine Verpackung mit verpacktem elektrischem Gerät mit externem Sender gemäß der Erfindung,
- Figur 2: eine Anzeigeeinrichtung des elektrischen Gerätes gemäß Figur 1 und
- Figur 3: ein elektrisches Gerät gemäß Figur 1.

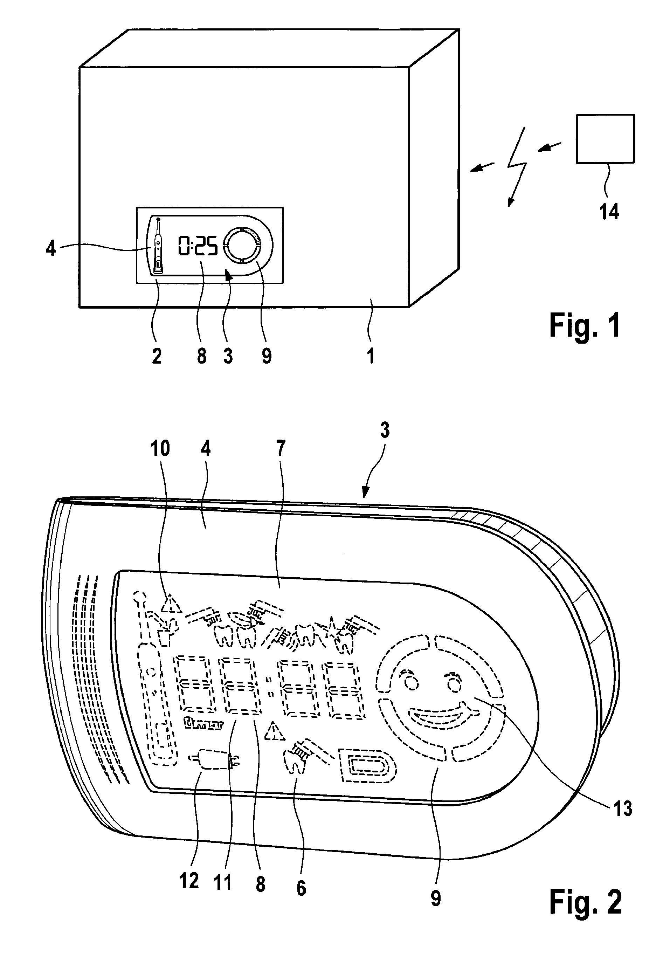

Figur 1 zeigt eine Verkaufsverpackung 1 in transparenter oder teilweise transparenter Ausführung, durch die der Inhalt oder Teile des Inhaltes von außen durch die Verpackung sichtbar sind (siehe in Figur 1 das transparente Sichtfenster 2). Mindestens ein Teil des Inhaltes ist ein elektrisches bzw. elektronisches Gerät 3, das über optische oder akustische Anzeigemittel wie Leuchtdioden, Lampen, Signalgeber oder LCD-Displays verfügt. Figur 1 zeigt durch das Sichtfenster das LCD-Display der Anzeigeeinrichtung 4 vorzugsweise für eine elektrische Zahnbürste 5 (die beide zusammen hier das elektrische Gerät 3 bilden). Dabei läuft auf der Anzeigeeinrichtung 4 eine sich vorzugsweise endlos wiederholende (zeitgeraffte) Sequenz ab, die die Aufmerksamkeit des Konsumenten weckt und das Informationsbedürfnis des Konsumenten über die Produktfunktionen befriedigt, der z.B. am Verkaufsregal im Geschäft am Produkt vorbeigeht - ohne dass hierzu eine weitere Einwirkung auf das Produkt oder die Verpackung notwendig ist. Die Demosequenz bzw. der Vorführmodus lässt sich während der Produktion des Gerätes aktivieren und läuft danach solange ab, bis die Energiequelle z.B. die Batterien oder Akkuzellen des elektronischen Gerätes verbraucht sind oder bis der Kunde die Sequenz nach dem Auspacken deaktiviert. Dies könnte beispielsweise durch Senden eines Funksignals, durch Betätigen einer Taste oder durch Unterbrechen der Spannungsversorgung geschehen.

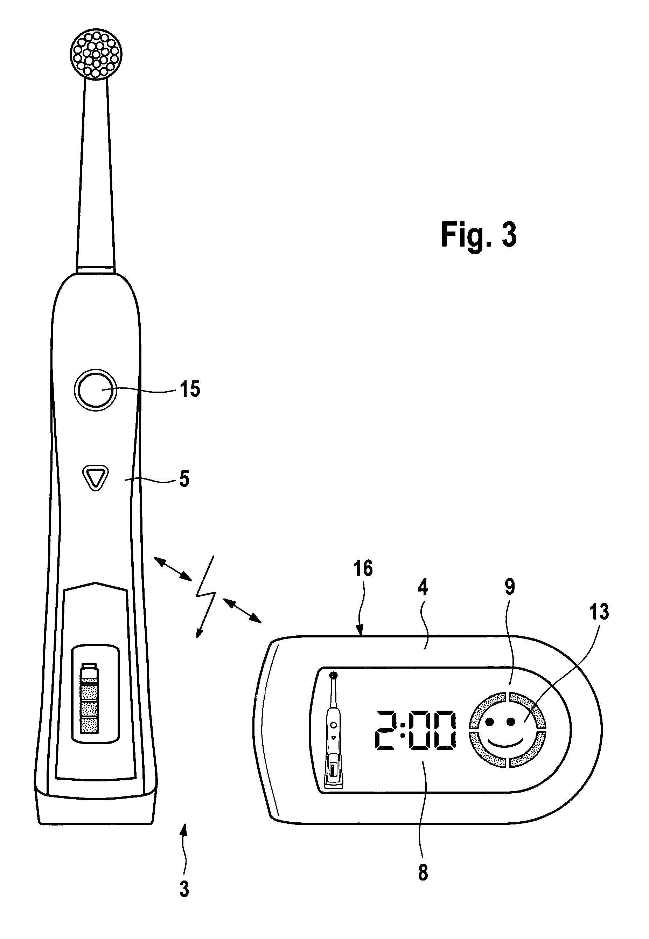

Eine Ausführung am Beispiel der elektrischen Zahnbürste nach Figur 3 mit so genannter SmartGuide Anzeigeeinrichtung 4 könnte wie folgt ausgestaltet sein. Die elektrische zahnbürste weist einen Ein/Aus Schalter 15 an dessen Handgriff auf. Die Anzeigeeinrichtung 4 weist an dessen Rückseite Taster oder Schalter 16 auf mit denen die Uhr einstellbar ist. Sowohl die Zahnbürste 15 wie die Anzeigeeinrichtung 4 sind mit Energiezellen bestückt. Die Anzeigeeinrichtung weist ferner eine Steuereinrichtung zur Steuerung der benutzunsspezifischen Signale 6 bis 13 auf. Die Verkaufsverpackung hat ein transparentes Fenster 2, durch die die Anzeigeeinrichtung 4 von außen sichtbar ist. Das Fenster kann alternativ auch als transparente Blase ausgeführt sein, die die Anzeigeeinrichtung 4 aus der Verpackung hervorstehen lässt. Die Anzeigeeinrichtung kann in einem Ruhemodus, einem Normalmodus, einem Vorführmodus (und ggf. einem Testmodus) betrieben werden. Die Anzeigeeinrichtung 4 wird während des Fertigungsprozesses oder vor verlassen des Herstellwerkes in einen Testmode gebracht. Dieser wird durch gleichzeitiges Drücken und Halten beider Tasten an der Rückseite der Anzeigeeinrichtung 4 während des Batterieeinlegens ausgelöst. Der Testmode wird dazu verwendet um die Funkübertragung und die Segmente des LC-Displays innerhalb der Endmontage /Qualitätssicherung der Anzeigeeinrichtung 4 zu prüfen. Bei Empfang bestimmter Befehle per Funk werden alle Segmente und alle Leuchtdioden ein- bzw. ausgeschaltet. Außerdem wird unmittelbar nach Verlassens des Testmodes die Stromaufnahme der Anzeigeeinrichtung 4 gemessen. Der Testmode wird beendet sobald mindestens eine der beiden Tasten losgelassen wird.

Der Testmode kann ebenfalls dazu verwendet werden, um die Demosequenz am Ende aller Prüfungen zu aktivieren. Hierzu muss das Gerät erneut in den Testmode gebracht werden. Empfängt es während der Zeit im Testmode keine Befehle wird nach dem Beenden des Testmodes automatisch die "Demosequenz" (diese entspricht dem Vorführmodus) gestartet.

Alternativ kann die Demosequenz zeitlich verzögert immer nach dem Verlassen des Testmodes z.B. nach 10 Sekunden, die für die Strommessung benötigt werden, oder nach 30 Tagen (Zusammenwirken der Zeitsteuereinrichtung mit einer Auswerteeinheit in der Anzeigeeinrichtung), aktiviert werden.

Als weitere Alternative könnte zur Aktivierung nach dem Verlassen des Testmodes innerhalb einer bestimmten Zeit (z.B. 3 Sekunden) eine beliebige Taste gedrückt werden.

Eine komfortable Aktivierung der Demosequenz erfolgt per Funk. Die Anzeigeeinrichtung 4 wird dabei während der Endmontage nur mit den Batterien bestückt. Erst beim Verpacken wird ein bestimmter Befehl mittels eines Senders 14 gesendet, der die Demosequenz im verpackten Gerät auslöst. Dies hat den Vorteil, dass die Demosequenz, die beim Transport der unverpackten Anzeigeeinrichtung 4 von der Endmontagelinie zur Verpackungslinie durch ungünstige Einflüsse (z.B. Unterbrechung der Batteriespannung durch Erschütterung) beendet werden könnte, erst im letzten Produktionsschritt in der sicheren Transportverpackung aktiviert wird. Dies ist besonders vorteilhaft, wenn - wie vorliegend - die Anzeigeeinrichtung 4 bereits mittels Funksignalen mit der Zahnbürste kommuniziert, so dass also ein Funksignalempfänger in der Anzeigeeinrichtung 4 ohnehin vorgesehen ist.

Alle beschriebenen Aktivierungsarten sind beliebig für ein elektrisches Gerät miteinander kombinierbar oder einzeln einsetzbar.

Die Demosequenz ist so ausgeführt, dass die wesentlichen Funktionen der Anzeigeeinrichtung 4 in teilweise zeitgeraffter Form immer wiederkehrend abgespielt werden. Figur 2 zeigt alle bildlichen Darstellungen des Vorführmodus in gestrichelter Form und gleichzeitig. Dazu gehören beispielsweise der Kraftsensoralarm 6, die Putzmodi 7, die Putzzeit 8, der Quadrantentimer 9, der Bürstenwechselalarm 10, die Uhrzeit 11, die LowBat-Anzeige 12 und die Smileys 13, die als Belohnung nach zeitlich ausreichendem Zähneputzen angezeigt werden. Die Demosequenz ist derart ausgebildet, dass die Stromaufnahme während dessen Ablauf möglichst gering ist, um eine mehrmonatige Funktion zu gewährleisten. Hierzu gehört auch, dass Verbraucher mit hoher Stromaufnahme wie z.B. der Funkempfänger nach der Aktivierung abgeschaltet bleiben und die Leuchtdioden nur gepulst betrieben werden.

Die Deaktivierung der Demosequenz beim Kunden kann durch Herausnehmen und Wiedereinlegen der Batterien erfolgen. Außerdem kann die Deaktivierung der Demosequenz zusätzlich oder alternativ beim Bestätigen einer der beiden Tasten erfolgen, wie dies zum Stellen der Uhrzeit notwendig ist.

Eine zusätzliche, spätere Aktivierung der Demosequenz außerhalb der Produktion und während der Benutzung kann während des normalen Betriebes erfolgen. Hierzu ist die Anzeigeeinrichtung 4 zunächst im Empfangszustand. Wird für eine bestimmte Zeit (z.B. 24h oder auch 10 Tage) kein Funksignal von der Zahnbürste empfangen (Zusammenwirken der Zeitsteuereinrichtung mit einer Auswerteeinheit in der Anzeigeeinrichtung), aktiviert sich die Demosequenz von selbst. Der Benutzer könnte mit dieser Funktion motiviert bzw. erinnert werden, seine Zähne zu putzen. Vorteilhaft ist diese Selbstaktivierung auch bei eventuellen Spannungsunterbrechungen auf dem Transportweg von der Produktionsstätte bis zum Händler.

## Patentansprüche

1. Verpackung und elektrisches Gerät (3) des persönlichen Bedarfs für die Körperpflege, das in der Verpackung (1) angeordnet ist und durch einen transparenten Bereich (2) der Verpackung (1) erkennbar ist, wobei das elektrische Gerät (1) eine Energiezelle und eine Steuereinrichtung aufweist, die eine Anzeigeeinrichtung zur Abgabe eines optischen und/oder akustischen Signals (6 bis 13) mit Energie versorgt und steuert, wobei die Steuereinrichtung derart ausgebildet ist, dass die Anzeigeeinrichtung steuerbar ist abhängig von einem Ruhemodus, bei dem kein benutzerspezifisches optisches und/oder akustisches Signal (6 bis 13) abgebbar ist und das Gerät keine elektrische Körperpflegebetriebsfunktion ausführt, einem Normalmodus, bei dem ein benutzungsspezifisches optisches und/oder akustisches Signal abgebbar ist und das Gerät zusätzlich eine elektrische Körperpflegebetriebsfunktion ausführt und einen Vorführmodus, bei dem eine benutzungsspezifische optische und/oder akustische Signalsequenz an der Anzeigeeinrichtung in der Verpackung abgebbar ist, **dadurch gekennzeichnet, dass** der Vorführmodus des Gerätes (3) ohne manuelle Einwirkung auf die Verpackung (1) aktivierbar ist.

2. Verpackung mit Gerät nach Anspruch 1, **dadurch gekennzeichnet, dass** das Gerät (3) zur Aktivierung des Normalmodus einen Schalter oder Taster (15) aufweist, der derart ansteuerbar ist, dass eine Betätigung des Schalters oder Tasters, die weniger als eine Sekunde andauert, zur Aktivierung des Normalmodus führt und dass zur Aktivierung des Vorführmodus eine dazu verschiedene Aktivierungseinrichtung oder Steuerung (16, 14) vorgesehen ist.

3. Elektrisches Gerät des persönlichen Bedarfs für die Körperpflege, insbesondere eine Zahnbürste, das eine Energiequelle und eine Steuereinrichtung aufweist, die eine Anzeigeeinrichtung (4) zur Abgabe eines optischen und/oder akustischen Signals (6 bis 13) mit Energie versorgt und steuert, wobei die Steuereinrichtung derart ausgebildet ist, dass die Anzeigeeinrichtung (4) steuerbar ist abhängig von einem Ruhemodus, bei dem kein benutzungsspezifisches optisches und/oder akustisches Signal (6 bis 13) abgebbar ist und das Gerät keine zusätzliche elektrische Körperpflegebetriebsfunktion ausführt, einem Normalmodus, bei dem das Gerät (3) zumindest eine elektrische Körperpflegebetriebsfunktion ausführt und einem Vorführmodus, bei dem eine benutzungsspezifische optische und/oder akustische Signalsequenz an der Anzeigeeinrichtung (4) abgebbar ist, wobei zur Aktivierung des Normalmodus ein Schalter oder Taster (15) vorgesehen ist, der derart gesteuert ist, dass eine Betätigung des Schalters oder Tasters, die weniger als eine Sekunde andauert, zur Aktivierung des Normalmodus führt, **dadurch gekennzeichnet, dass** zur Aktivierung des Vorführmodus eine dazu verschiedene Aktivierungseinrichtung oder Steuerung (14, 16) vorgesehen ist.

4. Verpackung und / oder Gerät nach zumindest einem der vorangegangenen Ansprüche, **dadurch gekennzeichnet, dass** die Steuereinrichtung die Anzeigeeinrichtung und das Gerät (3) derart ansteuert, dass im Vorführmodus eine Benutzung des Gerätes simulierbar ist, bei der an der Anzeigeeinrichtung (4) ein benutzerspezifisches Signal (6 bis 13) abgebbar ist, ohne dass das Gerät eine elektrische Körperpflegebetriebsfunktion ausführt.

5. Verpackung und / oder Gerät nach einem der vorangegangenen Ansprüche, **dadurch gekennzeichnet, dass** die Anzeigeeinrichtung (4) im Vorführmodus derart ansteuerbar ist, dass die Signale gegenüber dem Normalmodus abweichen und/oder in beschleunigter Abfolge anzeigbar sind.

6. Verpackung und / oder Gerät nach einem der vorangegangenen Ansprüche, **dadurch gekennzeichnet, dass** die Aktivierungseinrichtung zur Aktivierung des Vorführmodus einen Schalter oder Taster (16) aufweist, der insbesondere vom Schalter oder Taster (15) für den Normalmodus verschieden ist.

7. Verpackung und/oder Gerät nach einem der Ansprüche 1 bis 6, **dadurch gekennzeichnet, dass** die Aktivierungseinrichtung zur Aktivierung des Vorführmodus eine Funkempfangseinrichtung zur drahtlosen Aktivierung per Funksignal aufweist.

8. Verpackung und/oder Gerät nach einem der Ansprüche 1 bis 6, **dadurch gekennzeichnet, dass** die Aktivierungseinrichtung zur Aktivierung des Vorführmodus eine Zeitsteuereinrichtung aufweist, die derart ausgebildet ist, dass nach Verstreichen einer vorgegebenen Zeit eine Selbstaktivierung auslösbar ist.

9. Verpackung und/oder Gerät nach Anspruch 8, **dadurch gekennzeichnet, dass** die Zeitsteuerung mit einer Auswerteeinheit derart zusammenwirkt, dass die verstrichene Zeit seit der letzten Benutzung des Gerätes im Normalmodus auswertbar und der ermittelte Zeitwert mit einem Schwellwert vergleichbar und bei Überschreiten des Schwellwertes der Vorführmodus aktivierbar ist.

10. Verpackung und/oder Gerät nach einem der vorangegangenen Ansprüche, **dadurch gekennzeichnet, dass** die Anzeigeeinrichtung (4) als separates Teil des Gerätes (3) vorgesehen ist.

11. Verpackung und/oder Gerät nach einem der vorangegangenen Ansprüche, **dadurch gekennzeichnet, dass** das Gerät im Vorführmodus derart ansteuerbar ist, dass der Energieverbrauch der Anzeigeeinrichtung geringer ist als der Energieverbrauch der Anzeigeeinrichtung im Normalmodus.

12. Verpackung und/oder Gerät nach einem der vorangegangenen Ansprüche, **dadurch gekennzeichnet, dass** die Anzeigeeinrichtung im Vorführmodus derart ansteuerbar ist, dass diese Segmente oder Bilddarstellungen auf einem Liquid-Crystal-Display zeigt und/oder eine Leuchtdiode gepulst betreibbar ist und/oder ein Funkempfänger der Anzeigeeinrichtung nach der Aktivierung des Vorführmodus automatisch abschaltbar ist.

13. Verpackung und/oder Gerät nach einem der vorangegangenen Ansprüche, **dadurch gekennzeichnet, dass** die Anzeigeeinrichtung derart ansteuerbar ist, dass die Deaktivierung des Vorführmodus durch Herausnehmen und wieder Einlegen der Batterien und/oder eine spezifische Tastenkombination betätigbar ist.

14. Verfahren zur Aktivierung eines Vorführmodus eines elektrischen Gerätes in einer Verpackung nach Anspruch 1 oder eines elektrischen Gerätes nach Anspruch 3.

15. Verfahren nach Anspruch 14, **dadurch gekennzeichnet, dass** die Anzeigeeinrichtung zunächst einem Testmode unterzogen wird, bei dem alle Funktionen der Anzeigeeinrichtung geprüft werden und anschließend die Aktivierung des Vorführmodus erfolgt.

16. Verfahren nach Anspruch 14 oder 15, **gekennzeichnet durch** zumindest eines der Merkmale der Ansprüche 1 bis 13.
